# EUROPÄISCHE PATENTSCHRIFT

(11) **EP 2 949 021 B1**
(45) Veröffentlichungstag und Bekanntmachung des Hinweises auf die Patenterteilung: **14.02.2018**
(21) Anmeldenummer: 13802326.2
(22) Anmeldetag: 04.12.2013
(51) Int. Cl.: H01M 10/44, H02J 7/00, H01M 10/0525, H01M 10/42

(54) **ANSTEUERVORRICHTUNG FÜR EIN ELEKTRISCHES ENERGIESPEICHERSYSTEM**
CONTROL DEVICE FOR AN ELECTRIC ENERGY STORAGE SYSTEM
DISPOSITIF DE CONTROLE POUR UN SYSTÈME DE STOCKAGE D'ÉNERGIE ÉLECTRIQUE

(30) Priorität: 25.01.2013 DE 102013201221
(43) Veröffentlichungstag der Anmeldung: 02.12.2015
(73) Patentinhaber: SMA Solar Technology AG, 34266 Niestetal (DE)
(72) Erfinder: ZIEGLER, Joerg, 71277 Rutesheim (DE); BOEDEKER, Hendrik, 72070 Tuebingen (DE); PLUM, Thomas, 70197 Stuttgart (DE); POHLEMANN, Rene, 99195 Eckstedt (DE)
(74) Vertreter: Lahnor, Peter
(86) Internationale Anmeldenummer: PCT/EP2013/075462
(87) Internationale Veröffentlichungsnummer: WO 2014/114393

(56) Entgegenhaltungen:
- EP-A1- 2 293 375
- WO-A1-2012/061262
- DE-U1-212010 000 081
- US-A1- 2008 086 247
- US-A1- 2009 146 610

## Beschreibung

Die Erfindung betrifft eine Ansteuervorrichtung für eine elektrische Energiespeichereinrichtung. Die Erfindung betrifft weiterhin ein Verfahren zum Betreiben eines elektrischen Energiespeichersystems.

### Stand der Technik

Im Stand der Technik sind kombinierte Systeme mit einem Gleichspannungserzeuger, beispielsweise einer Fotovoltaikanlage und einem daran angekoppelten elektrochemischem Energiespeicher bekannt. Dabei kommen als Energiespeichersysteme unterschiedliche Systeme zum Einsatz, z.B. Bleibatterien oder Lithium-Ionen-Batterien.

DE 21 2010 000 081 U1 offenbart ein modulares Batteriemanagementsystem zum Verwalten mehrerer Batterien und zum Betreiben einer Last. Gemäß einem Aspekt enthält das System mehrere Batteriemanagement-Steuerungsmodule, mehrere bidirektionale Spannungsumsetzermodule, die jeweils mit den Batterien verbunden sind und mit den Batteriemanagement-Steuerungsmodulen verbunden sind, wobei die bidirektionalen Spannungsumsetzermodule miteinander parallel geschaltet sind; und mehrere Energiespeichermodule, die jeweils mit den bidirektionalen Spannungsumsetzermodulen parallel geschaltet sind und mit der Last verbunden sind. Die bidirektionalen Spannungsumsetzermodule sind dafür konfiguriert, elektrische Energie von den Batterien zu der Last oder von den Energiespeichermodulen zu den Batterien übertragen. Die Batteriemanagement-Steuerungsmodule sind dafür ausgebildet, ein vorgegebenes Programm auf der Grundlage der Zustandsinformationen jeder Batterie auszuführen und die bidirektionalen Spannungsumsetzermodule zu steuern. Offenbart ist ferner, dass Batteriepacks alle Arten von Batterien enthalten können, zum Beispiel Blei-Säure-Batterien oder Lithium-Ionen-Batterien.

US 2008/0086247 A1 offenbart auch eine Energiespeichereinrichtung mit mehreren unabhängigen Energiespeichern, die zugeschaltet werden können um die Last mit elektrischer Energie zu versorgen. Die einzelnen Speichereinheiten werden im Master-Slave Modus betrieben und nach bedarf zu- oder abgeschaltet werden. Es besteht ein Bedürfnis nach einer universell einsetzbaren Ansteuervorrichtung für ein elektrochemisches Batteriespeichersystem, welches von einer Technologie des elektrochemischen Batteriespeichers unabhängig ist.

### Offenbarung der Erfindung

Die Erfindung schafft eine Ansteuervorrichtung und ein Verfahren zum Betreiben eines elektrischen Energiespeichersystems mit einer Ansteuervorrichtung und wenigstens einem an die Ansteuervorrichtung angeschlossenen Energiespeichermodul bereitgestellt, gemäß dem Gegenstand der unabhängigen Ansprüchen. Bevorzugte Weiterbildungen der Vorrichtung und des Verfahrens sind Gegenstand von Unteransprüchen.

### Vorteile der Erfindung

Als besonders vorteilhaft wird bei der Erfindung angesehen, dass sie eine Verwendung unterschiedlicher Batterietypen bzw. unterschiedlicher Batterietechnologien ermöglicht. Dies ist dadurch möglich, dass ein Management-Mastersystem in die Ansteuerungsvorrichtung verlagert ist, wodurch unterschiedlichste Technologien von angeschlossenen Energiespeichermodulen gehandhabt werden können. Die Management-Mastereinrichtung innerhalb der Ansteuervorrichtung stellt gewissermaßen eine ausgelagerte Intelligenz zur "intelligenten" Behandlung der angeschlossenen Energiespeichermodule dar. Dadurch ergibt sich vorteilhaft eine höhere Flexibilität bezüglich Speicherkapazität und Batterietechnologie, da das erfindungsgemäße System sowohl mit einer Batterie, als auch mit zwei Batterien gleichen oder unterschiedlichen Typs betrieben werden kann. Dadurch kann vorteilhaft für jeden an die Laderegelungseinrichtung angeschalteten Energiespeicher ein individuelles Ladeverfahren zum Laden des Energiespeichers verwendet werden.

Durch die Möglichkeit der dynamischen, batteriezustandsabhängigen Umschaltung zwischen den zwei Batterien gleichen oder unterschiedlichen Typs ist ein batterieschonender und damit lebensdauerverlängernder Betrieb der Batterien möglich.

Ein weiterer Vorteil der Erfindung ergibt sich durch die automatische Adaption bzw. durch die Autoparametrierung des Batteriemanagementsystems entsprechend dem vorhandenen Batterietyp. Damit trägt die Erfindung maßgeblich zu einer Fehlervermeidung bei, da eine manuelle Anpassung bzw. eine manuelle Parametrierung des Systems vermieden wird.

### Kurze Beschreibung der Figuren

Es zeigen:
- Fig. 1: ein prinzipielles Blockschaltbild eines elektrischen Energiespeichersystems für eine Bleibatterie;
- Fig. 2: ein prinzipielles Blockschaltbild eines elektrischen Energiespeichersystems für eine Lithium-Ionen-Batterie;
- Fig. 3: eine prinzipielle Darstellung eines Batteriemanagementsystems für eine Lithium-Ionen-Batterie;
- Fig. 4: eine prinzipielle Darstellung einer ersten Ausführungsform einer erfindungsgemäßen Ansteuervorrichtung;
- Fig. 5: eine prinzipielle Darstellung einer zweiten Ausführungsform einer erfindungsgemäßen Ansteuervorrichtung; und
- Fig. 6: ein prinzipielles Flussdiagramm einer Ausführungsform des erfindungsgemäßen Verfahrens;

### Ausführungsformen der Erfindung

### Begriffsbestimmung

Die Begriffe Batterie, Energiespeicherzelle, Energiespeichermodul und Energiespeichersystem werden nachfolgend als Einrichtungen verstanden, mittels denen elektrische Energie auf elektrochemischem Wege speicherbar ist und die wiederaufladbar sind. Nachdem ein Energiespeichermodul eine Ansammlung mehrerer Energiespeicherzellen darstellt, und ein Energiespeichersystem eine Ansammlung mehrerer Energiespeichermodule darstellt, sind für die Belange der vorliegenden Erfindung die genannten Begriffe funktional in diesem Sinn zu verstehen.

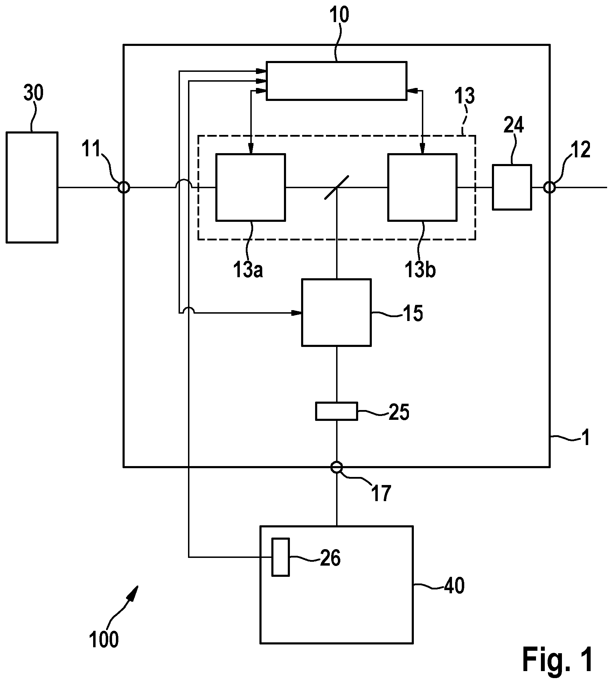

Fig. 1 zeigt ein prinzipielles Blockschaltbild eines elektrischen Energiespeichersystems 100. Das elektrische Energiespeichersystem 100 weist eine Ansteuervorrichtung 1 mit einem ersten Anschluss 11 für einen Gleichspannungserzeuger 30 (beispielsweise eine Fotovoltaikanlage oder ähnliches) auf. Mittels des Gleichspannungserzeugers 30 wird elektrische Gleichspannung erzeugt und der Ansteuervorrichtung 1 zugeführt. Die elektrische Gleichspannung wird innerhalb der Ansteuervorrichtung 1 einer Spannungswandlereinrichtung 13 zugeführt, die einen bidirektionalen Gleichspannungswandler 13a und einen Wechselrichter 13b umfasst. Am Ausgang der Spannungswandlereinrichtung 13 kann eine Leistungsmesseinrichtung 24 angeordnet sein. In einem Gleichspannungszwischenkreis der Spannungswandlereinrichtung 13 ist ein so genannter "Batteriepfadabzweig" angekoppelt, der eine Laderegelungseinrichtung 15 in Form eines bidirektionalen Gleichspannungswandlers umfasst, an dessen Ausgang eine Sensoreinrichtung 25 (z.B. ein Spannungs-, Stromsensor) angeschaltet ist. Die Sensoreinrichtung 25 kann innerhalb oder außerhalb der Ansteuervorrichtung 1 angeordnet sein. An einem Anschluss 17 der Ansteuervorrichtung 1 ist ein erstes Energiespeichermodul 40 (z.B. eine Bleibatterie) angeschlossen. Kennwerte des ersten Energiespeichermoduls 40 werden mittels eines Temperatursensors 26 und der Sensoreinrichtung 25 erfasst und an eine Steuerungseinrichtung 10 innerhalb der Ansteuervorrichtung 1 übertragen.

Der Gleichspannungswandler 13a hat die Aufgabe, die durch den Gleichspannungserzeuger 30 erzeugte Gleichspannung an den gewünschten Eingangsspannungsbereich des Wechselrichters 13b anzupassen. Zusätzlich verfügt der Gleichspannungswandler 13a über eine Funktion, welche dafür sorgt, dass die vom Gleichspannungserzeuger 30 entnommene Leistung im Wesentlichen stets maximal ist. Hierfür wird mithilfe eines Suchalgorithmus ("Maximum Power Point Tracking") der ständig schwankende, maximale Leistungspunkt ermittelt.

Der Wechselrichter 13b sorgt dann entweder für die direkte Versorgung (Inselbetrieb) von Haushaltsverbrauchern (nicht dargestellt) oder für die Einspeisung der elektrischen Leistung in ein elektrisches Netz (nicht dargestellt). Gegebenenfalls kann der Wechselrichter 13b zusätzlich Leistung aus dem Netz beziehen um damit das Energiespeichermodul 40 zu laden.

Wie in der Figur angedeutet, werden die Komponenten: Gleichspannungswandler 13a, Wechselrichter 13b und dazugehörige Auswerte- und Steuerelektronik (nicht dargestellt) insbesondere in einem einzigen Gerät in Form der Ansteuervorrichtung 1 verbaut. Möglich sind auch Gesamtsysteme, bei denen zusätzlich das Energiespeichermodul 40 und ein eventuell vorhandenes Batteriemanagementsystem (falls vorhanden) fester Bestandteil des Gesamtsystems sind.

Dabei ist die Ausführung des Batteriemanagementsystems sehr von der verwendeten Batterietechnologie, der Batteriegröße, der Beanspruchung der Batterie und den Umgebungsbedingungen abhängig. Im einfachsten Fall, zum Beispiel bei kleineren BleiBatterien im stationären Bereich mit geringer Beanspruchung, wird kein echtes Batteriemanagement benötigt. Es wird lediglich Spannung und Strom am Ausgang der Laderegelungseinrichtung 15 (alternativ auch direkt an der Batterie) und die Temperatur mittels des Temperatursensors 26 an einem der Batteriepole erfasst. Auf diese Weise wird lediglich global und nicht auf Modul- oder Zellenebene das Über- oder Unterschreiten von Spannungs- und Temperaturgrenzen überwacht. Zusätzlich kann über eine Energiebilanzierung ein Ladezustand (engl. State of Charge, SOC) der Batterie bestimmt werden.

Bei anderen Batterietechnologien (z.B. Lithium-Ionen-Batterien) ist ein Batteriemanagementsystem hingegen zwingend erforderlich. Diese Batteriemanagementsysteme bieten, je nach Beanspruchung der Batterie, die Möglichkeit einer Überwachung von Modulen und Zellverbänden bis hin zu einer Einzelzellüberwachung (z.B. hinsichtlich Spannung, Strom, Temperatur, usw.). Zusätzlich können bei Bedarf Funktionen, wie z.B. aktiver Ladungsausgleich zwischen den Einzelzellen (engl. Cell Balancing) und gegebenenfalls ein aktives thermisches Management (z.B. aktiv Kühlen/Wärmen) realisiert werden.

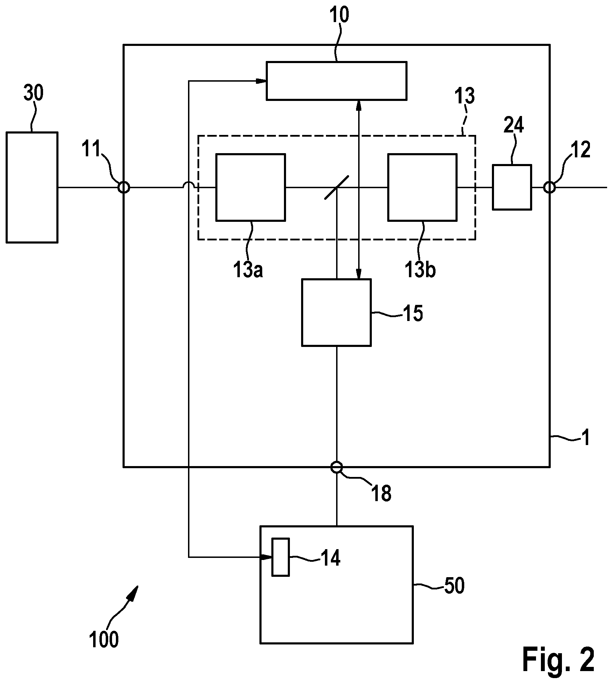

Eine in Fig. 2 dargestellte Topologie eines elektrischen Energiespeichersystems 100 entspricht im Wesentlichen der Konfiguration von Fig. 1, mit dem Unterschied, dass nunmehr an die Ansteuervorrichtung 1 ein alternatives zweites elektrisches Energiespeichermodul 50 in Form einer Lithium-Ionen-Batterie angeschlossen ist. Ein Charakteristikum einer derartigen Batterie ist es, dass sie eine Management-Einrichtung in Form eines Batteriemanagementsystems 14 innerhalb der Batterie integriert aufweist. Batteriepacks bestehen aus mehreren Modulen, welche wiederum aus einer Vielzahl von Einzelzellen bestehen. Aus diesem Grund findet hier bevorzugt das Master-Slave-Prinzip Anwendung.

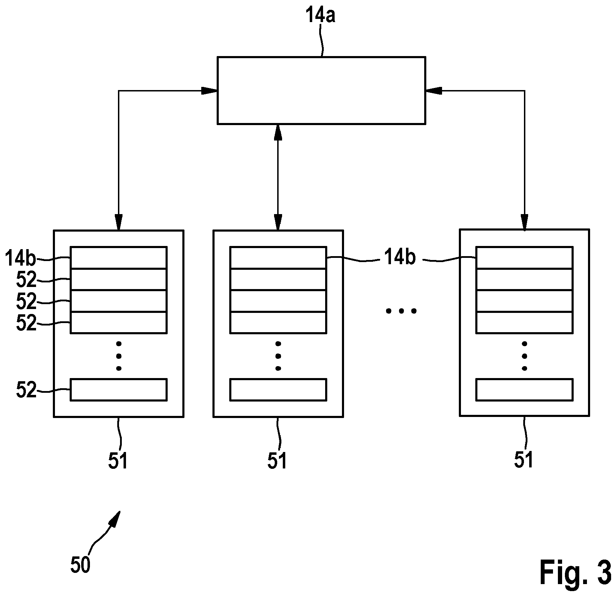

Fig. 3 zeigt stark vereinfacht ein derartiges Prinzip, wobei jedes einzelne Zellbündel 51 eine eigene Slave-Elektronik zu einer Einzelzellenüberwachung (z.B. in Form von Spannungsmessung, Temperaturmessung, Ladungsausgleich zwischen Zellen) aufweist. Die gemessenen Werte werden aufbereitet und an eine Management-Mastereinrichtung 14a, welche zu einer Überwachung des gesamten Energiespeichermoduls 50 dient, übertragen. Mithilfe von Modellen und Algorithmen bestimmt die Management-Mastereinrichtung 14a sodann Größen wie Ladezustand, Alterungszustand (engl. State of Health, SOH) und Leistungsfähigkeit der Batterie. Darüber hinaus werden Grenzwerte von Temperatur, elektrischer Spannung und elektrischem Lade-/Entladestrom überwacht. Die Management-Mastereinrichtung 14a überträgt dann die Daten (z.B. via RS 485, CAN, Ethernet, usw.) an eine übergeordnete Auswerte-und Steuereinheit.

Fig. 3 zeigt eine schematische Darstellung eines Batteriemanagementsystems nach dem Master-Slave-Prinzip, wie es vorzugsweise für Lithium-Ionen-Zellbündel 51 verwendet wird. Vorzugsweise bilden die Energiespeicherzellen 52 und eine dazugehörige Elektronik (nicht dargestellt) einer Management-Slaveeinrichtung 14b der Managementeinrichtung 14 ein Komplettsystem, welches in einem Gehäuse eines Zellbündels 51 integriert ist. Man erkennt, dass die Management-Mastereinrichtung 14a mit den einzelnen Zellbündeln 51 über die jeweiligen Management-Slaveeinrichtungen 14b kommuniziert, wobei die Management-Slaveeinrichtungen 14b ihrerseits die einzelnen Zellen 52 der einzelnen Zellbündel 51 bzw. der Energiespeichermodule 50 überwachen, ansteuern bzw. regeln.

Erfindungsgemäß ist nunmehr vorgesehen, dass die Management-Mastereinrichtung 14a in die Ansteuervorrichtung 1 integriert wird.

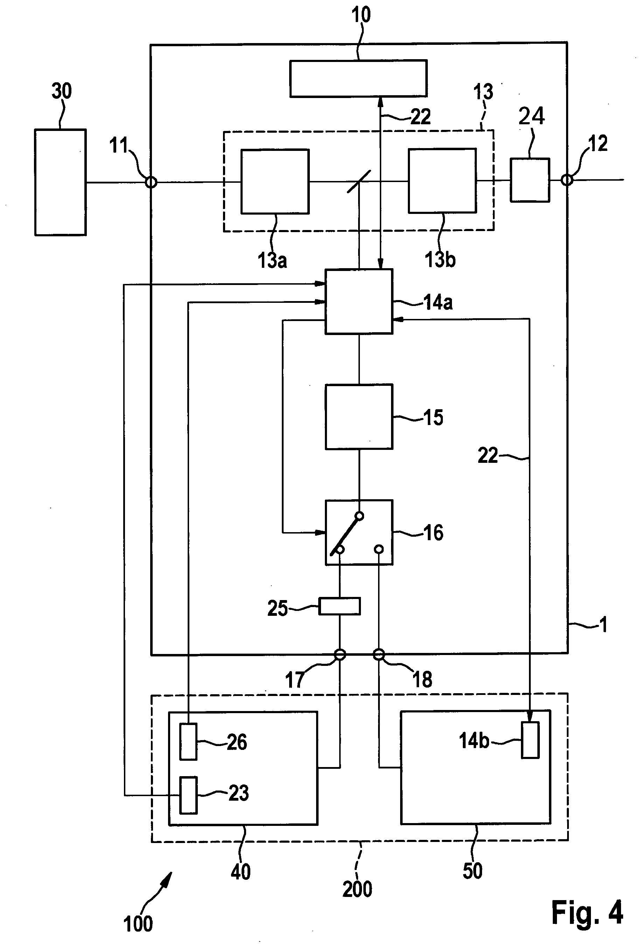

Fig. 4 zeigt ein elektrisches Energiespeichersystem 100 mit einem ersten Ausführungsbeispiel der erfindungsgemäßen Ansteuervorrichtung 1. Die prinzipielle Konfiguration entspricht derjenigen von Fig. 1, mit dem Unterschied, dass nunmehr die Management-Mastereinrichtung 14a mit einem Gleichspannungszwischenkreis zwischen dem Gleichspannungswandler 13a und dem Wechselrichter 13b elektrisch verschaltet ist. Mit der Management-Mastereinrichtung 14a ist die Laderegelungseinrichtung 15 verschaltet. Mit einem Ausgang der Laderegelungseinrichtung 15 ist eine Umschalteinrichtung 16 (z.B. ein Zeitmultiplexer) verschaltet, die in der Lage ist, zwischen den Anschlüssen 17,18 der Ansteuervorrichtung 1 hin und her zu schalten, an die jeweils ein Energiespeichermodul 40, 50, die zusammen eine elektrische Energiespeichereinrichtung 200 bilden, angeschlossen ist.

Die Umschalteinrichtung 16 ist entweder als ein elektronischer Halbleiterschalter (z.B. MOSFET) oder als ein elektromechanisches Relais ausgebildet. Ein Relais hat dabei den Vorteil, dass es üblicherweise ohnehin bereits verwendet wird, um eine sichere Trennung zwischen der Batterie und dem Rest des Systems zu gewährleisten. Durch die Verwendung dieser bereits vorhandenen Trennschalter lässt sich die Umschaltung zwischen beiden Energiespeichermodulen 40, 50 vorteilhaft ohne zusätzlichen Hardwareaufwand realisieren.

Im Ergebnis ist es auf diese Weise möglich, mittels der Umschalteinrichtung 16 zwischen zwei technologisch unterschiedlichen oder auch gleichen Energiespeichermodulen 40,50 umzuschalten, um dadurch einen möglichst optimalen Ladevorgang für die Energiespeichermodule 40, 50 bereitzustellen. Vorzugsweise ist es möglich, nach einem Umschaltvorgang möglichst zeitnah von einem Ladeverfahren eines zuvor angeschalteten Energiespeichermoduls 40, 50 auf ein Ladeverfahren eines aktuell angeschalteten Energiespeichermoduls 40, 50 umzuschalten, so dass das neu angeschaltete Energiespeichermodul 40, 50 nicht mit dem Ladeverfahren des zuvor angeschaltet Energiespeichermoduls 40, 50 beaufschlagt und dadurch möglicherweise geschädigt wird.

Die zentrale Management-Mastereinrichtung 14a wertet die von den Energiespeichermodulen 40, 50 übermittelten Daten bzw. Sensorsignale aus und steuert auf Grundlage dieser Daten und mittels verschiedener Bewertungs- und Regelalgorithmen die Laderegelungseinrichtung 15 und die Umschalteinrichtung 16 im Wesentlichen synchron. Zusätzlich kommuniziert die Management-Mastereinrichtung 14a über eine Kommunikationsschnittstelle 22 (z.B. RS 485, CAN, Ethernet, usw.) mit der übergeordneten Steuerungseinrichtung 10. Diese sendet an die Management-Mastereinrichtung 14a eine Anforderung für das Laden bzw. Entladen des Energiespeichermoduls 40, 50 bzw. der Energiespeichermodule 40, 50. Umgekehrt sendet die Management-Masterrichtung 14a einen Status der Verfügbarkeit des Ladens oder Entladens der Energiespeichermodule 40, 50 an die Steuerungseinrichtung 10.

Eine Ermittlung von Zeitpunkten zur Umschaltung zwischen den Energiespeichermodulen 40, 50 und die eigentliche Ansteuerung der Halbleiterschalter oder Relais werden dabei von der Management-Mastereinrichtung 14a übernommen. Entsprechend des durch die Umschalteinrichtung 16 ausgewählten Speichermodultyps wird die Ansteuerung der Laderegelungseinrichtung 15 durch die Management-Mastereinrichtung 14a dynamisch angepasst.

Um für unterschiedliche Energiespeichermodule 40, 50 die gleiche Laderegler-Hardware verwenden zu können, sollten von beiden Energiespeichermodulen 40, 50 die bevorzugten Spannungs- und Stromfenster der Laderegelungseinrichtung 15 eingehalten werden.

Im Falle von relativ einfach zu regelnden Batterietypen, wie sie beispielsweise stationäre Bleibatterien repräsentieren, könnten die zu einer Parametrierung und Regelung wichtigen Daten (z.B. bevorzugtes Ladeverfahren, Spannungs-, Strom- und Temperaturgrenzwerte) fest auf einer Kodierungseinrichtung 23 (zum Beispiel ein RFID-Chip oder ein Barcode) abgelegt werden. Diese Daten können dann von der Management-Mastereinrichtung 14a ausgelesen werden und sorgen damit für eine Autoparametrierung des Gesamtsystems. Zusätzlich erfasst die Management-Masterrichtung 14a mittels einer Sensoreinrichtung 25 verschiedene Messwerte, wie z.B. elektrische Spannung, elektrischer Strom und Temperatur. Durch die parametrierten und gemessenen Werte kann mittels der Management-Masterrichtung 14a die Laderegelungseinrichtung 15 optimal auf den jeweiligen Energiespeichertyp angepasst werden. Eine zusätzliche Übertragung des bevorzugten Ladeverfahrens an die Management-Mastereinrichtung 14a hat den Vorteil, dass einerseits überprüft und plausibilisiert werden kann, ob die einzelnen Energiespeichermodule 40, 50 gleichen Typs sind und andererseits kann das optimale Ladeverfahren, entsprechend dem angeschlossenen Energiespeichermodultyp, automatisch eingestellt werden.

Bei komplexer zu überwachenden und zu regelnden Batterietypen, wie beispielsweise bei Lithium-Ionen-Batterien, funktioniert das Batteriemanagementsystem in ähnlicher Weise wie bereits mit Bezug auf Fig. 3 dargestellt wurde.

Allerdings ist jetzt die Management-Mastereinrichtung 14a nicht mehr integraler Bestandteil des Energiespeichermoduls 50, sondern die Management-Mastereinrichtung 14a wird erfindungsgemäß nunmehr an das übergeordnete System ausgelagert. Die Management-Slaveeinrichtungen 14b überwachen zwar auch weiterhin die Einzelheiten des Energiespeichermoduls 50 hinsichtlich Spannung, Strom, Temperatur, Ladungsausgleich, usw. Die von den Management-Slaveeinrichtungen 14b erfassten Messwerte, die sich mit der Temperatur ändernden Grenzwerte (Spannung, Strom) und das bevorzugte Ladeverfahren, zum Beispiel in Form einer Kennlinie, werden jetzt allerdings an die innerhalb der Ansteuervorrichtung 1 angeordnete Management-Mastereinrichtung 14a übertragen.

Im Ergebnis kann also die Management-Mastereinrichtung 14 der erfindungsgemäßen Ansteuervorrichtung 1 sowohl die Daten und Messwerte einfach zu regelnder Batterietypen, beispielsweise Bleibatterien, als auch die Daten von Batterietypen mit höheren Anforderungen an die Überwachung und Regelung, zum Beispiel Lithium-Ionen-Batterien, verarbeiten.

Denkbar wäre es auch, dass zur Übermittlung der Daten standardisierte Datenübertragungsprotokolle über eine Kommunikationsschnittstelle 22 verwendet werden. Als eine Busverbindung zwischen der Management-Mastereinrichtung 14a und der Management-Slaveeinrichtung kommen ein CAN Bus, ein I²C Bus oder eine sonstige geeignete Kommunikationsschnittstelle 22 in Betracht. Mithilfe der Daten und Messwerte der Batterien kann durch geeignete Algorithmen der jeweilige Batteriezustand in Bezug auf Ladezustand, Alterungszustand und Leistungsfähigkeit bestimmt werden. Abhängig vom Batteriezustand kann die Management-Mastereinrichtung 14a dann mittels der Umschalteinrichtung 16 dynamisch zwischen den Energiespeichermodulen 40, 50 hin- und herschalten. Darüber hinaus werden je nach Schalterstellung bzw. je nach angewähltem Energiespeichermodul 40,50 das Ladeverfahren und die Grenzwerte dynamisch angepasst.

Die in Fig. 4 dargestellte Topologie funktioniert vorteilhaft unabhängig von einer Anzahl und einem Technologietyp angeschlossener Energiespeichermodule 40, 50. Damit ergibt sich vorteilhaft ein hohes Maß an Flexibilität bei der Wahl des Energiespeichermoduls 40,50.

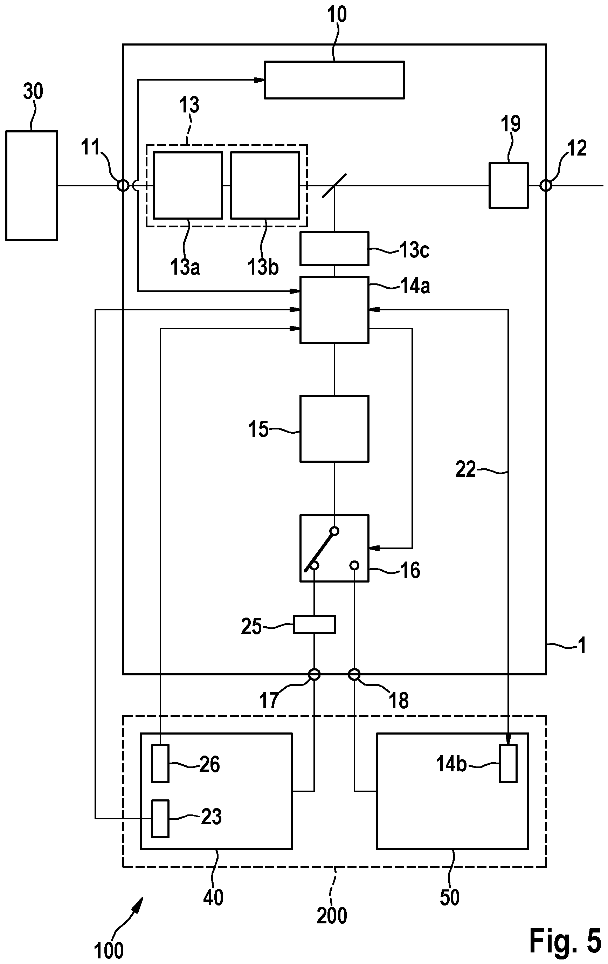

Denkbar wäre als eine Alternative auch eine in Fig. 5 dargestellte Topologie abgewandelter Form für ein AC-gekoppeltes System. Die Topologie von Fig. 5 unterscheidet sich von der Topologie der Fig. 4 darin, dass die Management-Mastereinrichtung 14a nunmehr an einen elektrischen Wechselspannungskreis nach dem Wechselrichter 13b angekoppelt ist. Dies ergibt den Vorteil, dass bereits vorhandene Systeme zur Gleichspannungserzeugung (z.B. eine auf einem Dach eines Gebäudes montierte Fotovoltaikanlage) mit wenigen zusätzlichen Komponenten zu einem elektrischen Energiespeichersystem 100 nachgerüstet werden können. Vorteilhaft ist ein Zugang zu einem AC-Anschluss wesentlich einfacher herzustellen als ein Zugang in den Zwischenkreis zwischen dem Gleichspannungswandler 13a und dem Wechselrichter 13b.

Bei der in Fig. 5 dargestellten Topologie wird gegenüber der Topologie von Fig. 4 lediglich ein zusätzlicher bidirektionaler Gleichrichter 13c benötigt, der die Ankopplung des Batterieabzweigs der Ansteuervorrichtung 1 auf der AC-Seite ermöglicht.

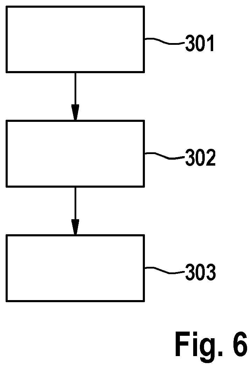

Fig. 6 zeigt ein Ablaufdiagramm einer Ausführungsform des erfindungsgemäßen Verfahrens:
In einem Schritt 301 wird ein Betriebszustand des Energiespeichermoduls 40, 50 ermittelt.

In einem Schritt 302 wird ein Übermitteln von wenigstens einem Wert des Betriebszustands an eine innerhalb der Ansteuervorrichtung 1 angeordnete Management-Mastereinrichtung 14a durchgeführt.

Schließlich wird in einem Schritt 303 ein mittels der Management-Mastereinrichtung 14a gesteuertes Betreiben des Energiespeichermoduls 40, 50 entsprechend einer Technologie und/oder eines Betriebszustands des Energiespeichermoduls 40, 50 durchgeführt.

Zusammenfassend werden mit der vorliegenden Erfindung vorteilhaft eine universelle Verwendung und eine Ausbaufähigkeit von bestehenden Gleichspannungs-Systemen ermöglicht. Vorteilhaft ergibt sich durch die erfindungsgemäße Ansteuervorrichtung eine weitgehende Flexibilität hinsichtlich einer Auswahl einer Technologie eines Energiespeichermoduls, so dass dadurch vorteilhaft eine im Prinzip langlebige und damit ökonomische Vorrichtung bereitgestellt wird. Vorteilhaft ist mittels der erfindungsgemäßen Ansteuervorrichtung ein schonender und ein entsprechend den Erfordernissen der jeweiligen Energiespeichermodule angepasster Betrieb der Energiespeichermodule möglich.

Es versteht sich von selbst, dass der Gleichspannungserzeuger in Form einer Fotovoltaikanlage lediglich beispielhaft anzusehen ist, so dass jegliche Gleichspannungserzeuger (z.B. eine Brennstoffzelle) an die erfindungsgemäße Ansteuervorrichtung angeschlossen werden können. Denkbar wäre z.B. auch eine Verwendung der Ansteuervorrichtung im Automotive-Bereich.

Vorteilhaft kann eine Implementierung der Erfindung großteils in Software durchgeführt werden, wobei die Software leicht in elektronische Steuereinrichtungen eingespielt und abgeändert werden kann.

## Patentansprüche

1. Ansteuervorrichtung (100) für eine elektrische Energiespeichereinrichtung (200), aufweisend:
- eine Steuerungseinrichtung (10);
- einen ersten Anschluss (11) für einen Gleichspannungserzeuger (30);
- einen zweiten Anschluss (12) für elektrische Wechselspannung;
- wenigstens zwei Anschlüsse (17, 18) für die Energiespeichereinrichtung (200);
- eine zwischen dem ersten Anschluss (11) und dem zweiten Anschluss (12) verschaltete Spannungswandlereinrichtung (13);
- eine mit einem Zwischenkreis der Spannungswandlereinrichtung (13) verschaltete Laderegelungseinrichtung (15);
- eine mit der Laderegelungseinrichtung (15) verschaltete Umschalteinrichtung (16), mittels der ein Ausgang der Laderegelungseinrichtung (15) zwischen den wenigstens zwei Anschlüssen (17,18) für die Energiespeichereinrichtung (200) umschaltbar ist; und
- eine Management-Mastereinrichtung (14a), mittels der in Abhängigkeit von Betriebsdaten der Energiespeichereinrichtung (200) ein Ladeverfahren für die Energiespeichereinrichtung (200) an die Laderegelungseinrichtung (15) vorgebbar ist, wobei die Umschalteinrichtung (16) entsprechend ansteuerbar ist.

2. Ansteuervorrichtung nach Anspruch 1, **dadurch gekennzeichnet, dass** mittels der Management-Mastereinrichtung (14a) die Ladereglungseinrichtung (15) derart steuerbar ist, dass mittels der Laderegelungseinrichtung (15) ein entsprechend einer Technologie eines Energiespeichermoduls (40, 50) der Energiespeichereinrichtung (200) ausgebildetes Ladeverfahren bereitstellbar ist.

3. Ansteuervorrichtung nach Anspruch 1 oder 2, **dadurch gekennzeichnet, dass** mittels der Umschalteinrichtung (16) entsprechend einer elektrischen Energiebilanz der Energiespeichermodule (40, 50) zwischen den Energiespeichermodulen (40, 50) umgeschaltet werden kann.

4. Ansteuervorrichtung nach einem der vorhergehenden Ansprüche, **dadurch gekennzeichnet, dass** mittels der Laderegelungseinrichtung (15) im Wesentlichen verzögerungsfrei ein spezifisches Ladeverfahren für die Energiespeichermodule (40, 50) bereitstellbar ist.

5. Ansteuervorrichtung nach einem der vorhergehenden Ansprüche, **dadurch gekennzeichnet, dass** die Betriebsdaten des Energiespeichermoduls (40, 50) mittels einer Kommunikationsschnittstelle (22) an die Management-Mastereinrichtung (14a) übertragbar sind.

6. Ansteuervorrichtung nach einem der Ansprüche 1 bis 5, **dadurch gekennzeichnet, dass** die Management-Mastereinrichtung (14a) in maschinenlesbarer Form hinterlegte Betriebsdaten des Energiespeichermoduls (40) verarbeiten kann.

7. Ansteuervorrichtung nach Anspruch 6, **dadurch gekennzeichnet, dass** die Betriebsdaten in dem Energiespeichermodul (40) mittels einer Kodierungseinrichtung (23) hinterlegt sind.

8. Ansteuervorrichtung nach Anspruch 7, **dadurch gekennzeichnet, dass** Daten eines Ladeverfahrens vom Energiespeichermodul (40, 50) zur Management-Mastereinrichtung (14a) übertragbar ist.

9. Ansteuervorrichtung nach einem der vorhergehenden Ansprüche, **dadurch gekennzeichnet, dass** die Management-Mastereinrichtung (14a) innerhalb der Ansteuervorrichtung (1) eine DC-Kopplung oder eine AC-Kopplung an die Spannungswandlereinrichtung (13) aufweist.

10. Verfahren zum Betreiben eines elektrischen Energiespeichersystems (100) mit einer Ansteuervorrichtung (1) gemäß einem der Ansprüche 1 bis 9 und wenigstens einem an die Ansteuervorrichtung (1) angeschlossenen Energiespeichermodul (40, 50), aufweisend die Schritte:
- Ermitteln eines Betriebszustands des Energiespeichermoduls (40, 50);
- Übermitteln von wenigstens einem Wert des Betriebszustands an eine innerhalb der Ansteuervorrichtung (1) angeordnete Management-Mastereinrichtung (14a); und
- mittels der Management-Mastereinrichtung (14a) gesteuertes Betreiben des Energiespeichermoduls (40, 50) entsprechend einer Technologie und/oder eines Betriebszustands des Energiespeichermoduls (40, 50).

11. Verfahren nach Anspruch 10, weiterhin aufweisend den Schritt:
- Übertragen eines Ladeverfahrens vom Energiespeichermodul (40, 50) an die Management-Mastereinrichtung (14a).

12. Verwendung einer Ansteuervorrichtung (1) nach einem der Ansprüche 1 bis 9 zum Betreiben wenigstens eines Energiespeichermoduls (40, 50) einer Energiespeichereinrichtung (200).

13. Computerprogrammprodukt mit Programmcodemitteln zur Durchführung des Verfahrens nach Anspruch 10 oder 11, wenn es auf einer elektronischen Steuereinrichtung (10) abläuft oder auf einem computerlesbaren Datenträger gespeichert ist.

## Claims

1. Actuating apparatus (100) for an electrical energy storage device (200), comprising:
- a control device (10);
- a first connection (11) for a DC voltage generator (30) ;
- a second connection (12) for AC voltage;
- at least two connections (17, 18) for the energy storage device (200);
- a voltage converter device (13) interconnected between the first connection (11) and the second connection (12);
- a charge regulating device (15) interconnected with a link circuit of the voltage converter device (13);
- a changeover device (16) interconnected with the charge regulating device (15), said changeover device (16) being useable to change over an output of the charge regulating device (15) between the at least two connections (17, 18) for the energy storage device (200); and
- a master management device (14a), via which a charging method for the energy storage device (200) is presettable to the charge regulating device (15) depending on operating data from the energy storage device (200), wherein the changeover device (16) is actuatable accordingly.

2. Actuating apparatus according to Claim 1, **characterized in that** the charge regulating device (15) is controllable by means of the master management device (14a) in such a way that a charging method which is designed according to a technology of an energy storage module (40, 50) of the energy storage device (200) is providable by means of the charge regulating device (15).

3. Actuating apparatus according to Claim 1 or 2, **characterized in that** the changeover device (16) can be used to change over between the energy storage modules (40, 50) according to an electrical energy balance in the energy storage modules (40, 50).

4. Actuating apparatus according to one of the preceding claims, **characterized in that** a specific charging method for the energy storage modules (40, 50) is providable by means of the charge regulating device (15) substantially without delay.

5. Actuating apparatus according to one of the preceding claims, **characterized in that** the operating data of the energy storage module (40, 50) are transferable to the master management device (14a) by means of a communication interface (22).

6. Actuating apparatus according to one of Claims 1 to 5, **characterized in that** the master management device (14a) is configured to process operating data from the energy storage module (40) that are stored in machine-readable form.

7. Actuating apparatus according to Claim 6, **characterized in that** the operating data in the energy storage module (40) are stored by means of a coding device (23).

8. Actuating apparatus according to Claim 7, **characterized in that** data from a charging method is transferable from the energy storage module (40, 50) to the master management device (14a).

9. Actuating apparatus according to one of the preceding claims, **characterized in that** the master management device (14a) within the actuating apparatus (1) comprises a DC coupling or an AC coupling to the voltage converter device (13).

10. Method for operating an electrical energy storage system (100) comprising an actuating apparatus (1) according to one of Claims 1 to 9 and at least one energy storage module (40, 50) connected to the actuating apparatus (1), comprising the following steps:
- determining an operating state of the energy storage module (40, 50);
- transferring at least one value of the operating state to a master management device (14a) arranged within the actuating apparatus (1); and
- operating, in a manner controlled by means of the master management device (14a), the energy storage module (40, 50) according to a technology and/or an operating state of the energy storage module (40, 50).

11. Method according to Claim 10, further comprising the following step:
- transferring a charging method from the energy storage module (40, 50) to the master management device (14a).

12. Use of an actuating apparatus (1) according to one of Claims 1 to 9 for operating at least one energy storage module (40, 50) of an energy storage device (200).

13. Computer program product having program code means for carrying out the method according to Claim 10 or 11 when it is executed on an electronic control device (10) or is stored on a computer-readable data storage medium.

## Revendications

1. Dispositif de commande (100) destiné à un dispositif de stockage d'énergie électrique (200), comprenant :
- un moyen de commande (10) ;
- une première borne (11) destinée à un générateur de tension continue (30) ;
- une deuxième borne (12) destinée à une tension électrique alternative ;
- au moins deux bornes (17, 18) destinées au dispositif de stockage d'énergie (200) ;
- un dispositif convertisseur de tension (13) connecté entre la première borne (11) et la deuxième borne (12) ;
- un dispositif de régulation de charge (15) connecté à un circuit intermédiaire du dispositif convertisseur de tension (13) ;
- un dispositif de basculement (16) connecté au dispositif de régulation de charge (15), au moyen duquel une sortie du dispositif de régulation de charge (15) peut être amenée à basculer entre les au moins deux bornes (17, 18) destinées au dispositif de stockage d'énergie (200) ; et
- un dispositif de gestion maître (14a), au moyen duquel un processus de charge peut être prédéterminé sur le dispositif de régulation de charge (15) pour le dispositif de stockage d'énergie (200) en fonction de données de fonctionnement du dispositif de stockage d'énergie (200), dans lequel le dispositif de basculement (16) peut être commandé de manière correspondante.

2. Dispositif de commande selon la revendication 1, **caractérisé en ce que** le dispositif de régulation de charge (15) peut être commandé au moyen du dispositif de gestion maître (14a) de manière à ce qu'un processus de charge mis en oeuvre d'une manière qui correspond à une technologie d'un module de stockage d'énergie (40, 50) du dispositif de stockage d'énergie (200) puisse être fourni au moyen du dispositif de régulation de charge (15).

3. Dispositif de commande selon la revendication 1 ou 2, **caractérisé en ce qu'**un basculement entre les modules de stockage d'énergie (40, 50) peut être effectué au moyen du dispositif de basculement (16) d'une manière qui correspond à un bilan d'énergie électrique des modules de stockage d'énergie (40, 50).

4. Dispositif de commande selon l'une quelconque des revendications précédentes, **caractérisé en ce qu'**un processus de charge spécifique ne présentant sensiblement aucun retard peut être fourni pour les modules de stockage d'énergie (40, 50) au moyen du dispositif de régulation de charge (15).

5. Dispositif de commande selon l'une quelconque des revendications précédentes, **caractérisé en ce que** les données de fonctionnement du module de stockage d'énergie (40, 50) peuvent être transmises au dispositif de gestion maître (14a) au moyen d'une interface de communication (22).

6. Dispositif de commande selon l'une quelconque des revendications 1 à 5, **caractérisé en ce que** le dispositif de gestion maître (14a) peut traiter des données de fonctionnement du module de stockage d'énergie (40) stockées sous une forme lisible par machine.

7. Dispositif de commande selon la revendication 6, **caractérisé en ce que** les données de fonctionnement sont stockées dans le module de stockage d'énergie (40) au moyen d'un dispositif de codage (23).

8. Dispositif de commande selon la revendication 7, **caractérisé en ce que** des données d'un processus de charge peuvent être transmises par le module de stockage d'énergie (40, 50) au dispositif de gestion maître (14a).

9. Dispositif de commande selon l'une quelconque des revendications précédentes, **caractérisé en ce que** le dispositif de gestion maître (14a) comporte, dans le dispositif de commande (1), un couplage par courant continu ou un couplage par courant alternatif au dispositif convertisseur de tension (13).

10. Procédé de mise en fonctionnement d'un système de stockage d'énergie électrique (100) comportant un dispositif de commande (1) selon l'une quelconque des revendications 1 à 9, et au moins un module de stockage d'énergie (40, 50) raccordé au dispositif de commande (1), comportant les étapes consistant à :
- déterminer un état de fonctionnement du module de stockage d'énergie (40, 50) ;
- transmettre au moins une valeur de l'état de fonctionnement à un dispositif de gestion maître (14a) disposé dans le dispositif de commande (1) ; et
- mettre en fonctionnement de manière commandée au moyen du dispositif de gestion maître (14a) le module de stockage d'énergie (40, 50) d'une manière qui correspond à une technologie et/ou à un état de fonctionnement du module de stockage d'énergie (40, 50).

11. Procédé selon la revendication 10, comportant en outre l'étape consistant à :
- transmettre un processus de charge du module de stockage d'énergie (40, 50) au dispositif de gestion maître (14a).

12. Utilisation d'un dispositif de commande (1) selon l'une quelconque des revendications 1 à 9, pour mettre en fonctionnement au moins un module de stockage d'énergie (40, 50) d'un dispositif de stockage d'énergie (200).

13. Produit de programme d'ordinateur comportant des moyens à code de programme destinés à mettre en oeuvre le procédé selon la revendication 10 ou 11 lorsqu'il est exécuté sur un dispositif de commande électronique (10) ou lorsqu'il est stocké sur un support de données lisible par ordinateur.
